Europäisches Patentamt

European Patent Office

Office européen des brevets

(11) Publication number: **0 567 833 A2**

## EUROPEAN PATENT APPLICATION

(21) Application number: **93105942.2**

(22) Date of filing: **13.04.93**

(51) Int. Cl.5: **G11B 33/08**

(30) Priority: **30.04.92 US 878715**

(43) Date of publication of application:
**03.11.93 Bulletin 93/44**

(84) Designated Contracting States:
**AT BE CH DE ES FR GB IT LI NL SE**

(71) Applicant: **INTERNATIONAL BUSINESS MACHINES CORPORATION**
**Old Orchard Road**
**Armonk, N.Y. 10504(US)**

(72) Inventor: **Boigenzahn, Jeffrey F.**
**1503 13th Avenue N.W.**
**Rochester, MN 55901(US)**
Inventor: **Daede, Ronald John**
**3016 17 Avenue N.W.**
**Rochester, MN 55901(US)**
Inventor: **Moser, Michael Anthony**
**6005 Crossmont Court**

**San Jose, CA 95120(US)**
Inventor: **Nagarajan, Subrahmanyan**
**1604 41st Street N.W., Nr. C15**
**Rochester, NM 55901(US)**
Inventor: **Ottesen, Hal Hjalmar**
**4230 Stoneham Lane N.W.**
**Rochester, NM 55901(US)**
Inventor: **Sharma, Arun**
**51 Winding Brook Road**
**New Rochelle, NY 10804(US)**
Inventor: **Sri-Jayantha, Muthuthamby**
**32 Sherwood Avenue**
**Ossining, NY 10562(US)**

(74) Representative: **Kirchhof, Norbert, Ing. grad.**
**IBM Deutschland Informationssysteme**
**GmbH**
**Patentwesen und Urheberrecht**
**D-70548 Stuttgart (DE)**

(54) Optimum rotational mode decoupling shock mount configuration for DASD's.

(57) An apparatus and a method for decoupling external linear vibration from a device mounted in an enclosure, so as to reduce resulting rotational motion of the device comprises n vibration isolation mounts having characteristics and being positioned so that the center of stiffness and the center of damping coincide with the center of mass of the device. The invention may be applied to direct access storage devices having arbitrary mounting configurations where the geometry of the mounting configurations and/or the mass distribution of the head-disc assembly are not necessarily-symmetrical. Alternatively, the damping and stiffness parameters may be isotropic in the plane of the device and the axes of the vibration isolation mounts may be disposed in a direction perpendicular to the plane of the device. The stiffness and damping constants may be equal for each mounting point and the mounting points may be located so as to be symmetric with respect to each other in the plane of the device. The center of stiffness and the center of mass may also be at the same point along an axis perpendicular to the plane of the device. A balancing mass may be applied to the device to change its center of mass to coincide with the center of stiffness. For a given mass and inertia distribution, isolation mounts are designed to be located polygonally shaped configurations so as to satisfy critical equations so that complete rigid body mode decoupling occurs. With an assumption that the mount stiffness and damping are to be identical for all mounts, the geometry of their locations are simplified to have symmetries that would result in regular polygons such as an isosceles triangle, a trapezoid, a square, a rectangle, etc.

EP 0 567 833 A2

Rank Xerox (UK) Business Services
(3.10/3.6/3.3.1)

# FIG. 1

DISK ENCLOSURE

CG OFFSET

EP 0 567 833 A2

This invention relates to direct access storage devices (DASD's). More particularly, it relates to shock mounts for DASD's which decouple the linear and rotational vibration modes of a head-disc assembly (HDA) subjected to external vibration.

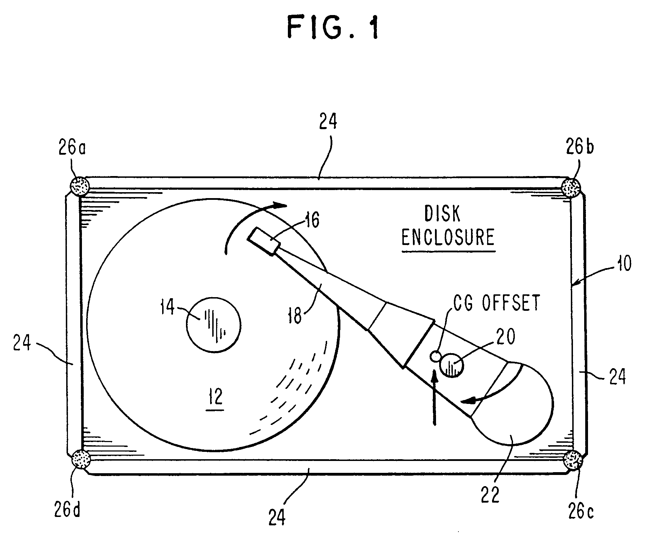

Referring to Fig. 1, the isolation system in a rotary actuator disk drive 10 is designed to minimize the shock and vibration levels experienced by the HDA. The HDA includes a rotary disc 12 which rotates with a spindle 14 driven by a motor (not shown). Disc 12 interacts with a read/write head 16 mounted at the end of an actuator arm 18. Arm 18 pivots about a pivot point 20 under the action of the coil 22 of a voice coil motor.

When the user frame 24 (for example the disk drive mounting enclosure in a personal computer) is subject to an external acceleration input a number of shock mounts 26a, 26b, 26c and 26d disposed between the drive 10 and the frame 24 minimize the effect of shock and vibration on the operation of drive 10. However, acceleration inputs are transmitted through the shock mounts. A disk drive with shock mounts, when excited by external linear acceleration, will in general experience both linear and rotational vibration at the HDA level. For DASD's with a rotary actuator, the rotary motion will result a in track misregistration (TMR) component if the servo rejection is not sufficiently high at the frequency range of interest. TMR related failure modes of a rotary actuator-based DASD reveal that the isolation mounts are not optimally designed to minimize the linear input to rotary acceleration coupling. At times form factor considerations may limit the freedom available for shock mount design. Until the present time there has been no systematic design approach to suppress the rotational mode dynamics. For disk drives having high track density, the shock and vibration isolation may be as critical in the design as form factor constraints.

It is an object of the invention to provide a rotary actuator disk drive which is designed to minimize the shock and vibration levels experienced by the HDA when the user frame is subject to external acceleration inputs.

It is another object of the invention to provide a mounting arrangement, for a rotary actuator disk drive wherein when the drive is subjected to a linear acceleration, this acceleration is not converted into rotary motion of the HDA.

It is yet another object of the invention to provide a mounting arrangement for a rotary actuator disk drive which can use isolators which are isotropic.

In accordance with the invention, the apparatus for decoupling external linear vibration from a device mounted in an enclosure, so as to reduce resulting rotational motion of the device comprises n vibration isolation mounts having characteristics and being positioned so that the center of stiffness and the center of damping coincide with the center of mass of the device. Advantageously, the present invention may be applied to arbitrary mounting configurations where the geometry of the mounting configurations and/or the mass distribution of the HDA are not necessarily symmetrical. Alternatively, the damping and stiffness parameters may be isotropic in the plane of the device and the axes of the vibration isolation mounts may be disposed in a direction perpendicular to the plane of the device.

Further, in accordance with the invention the stiffness and damping constants may be equal for each mounting point and the mounting points may be located so as to be symmetric with respect to each other in the plane of the device. The center of stiffness and the center of mass may also be at the same point along an axis perpendicular to the plane of the device. If necessary, a balancing mass may be applied to the device to change its center of mass to coincide with the center of stiffness.

For a given mass and inertia distribution, isolation mounts are designed to be located in triangular, quadrilateral, pentagonal, hexagonal and in general a polygonally shaped configuration to satisfy critical equations so that complete rigid body mode decoupling occurs. With an assumption that the mount stiffness and damping are to be identical for all mounts, the geometry of their locations are simplified to have symmetries that would result in regular polygons such as an isosceles triangle, a trapezoid, a square, a rectangle, etc.

The invention is also directed to methods for producing the apparatus.

Fig. 1 is a somewhat schematic diagram of a rotary drive in a user frame of a computer.

Fig. 2 is a perspective view of an isotropic vibration isolation mount.

Fig. 3a to fig. 3d illustrate various mounting configurations with the vibration isolation mounts being at the corners of a triangle, a rectangle, a pentagon, and a hexagon, respectively.

Fig. 4 illustrates a nonsymmetrical mounting configuration in accordance with the invention.

Fig. 5a illustrates a mounting configuration with the center of mass of the HDA being located at a point other than the center of stiffness.

Fig. 5b and fig. 5c illustrate transfer functions for the mode coupling for various distances between the center of mass of the HDA and the center of stiffness of the arrangement of Fig. 5a.

3

EP 0 567 833 A2

Fig. 6a illustrates an existing mounting configuration for a typical rotary drive. Fig. 6b illustrates a mounting arrangement using isotropic vibration isolation mounts, wherein the drive of Fig. 6a is modified.

Fig. 7a illustrates possible modes of vibration for a non-rigid user frame.

Fig. 7b illustrates changes in the user frame to eliminate the modes of vibration illustrated in Fig. 7a.

The method for producing an isolation system in accordance with the invention is described by reference to the parameters for a typical rotary drive. The specifications are:

m = mass of the HDA = 0.0470 kg

$I_{zz}$ is equal to Moment of Inertia about the center of gravity of the HDA = $0.263*10^{-4} kg.m^2$

The co-ordinates of the center of gravity of the rotary drive with respect to the frame (in meters) are:

$x_{cg}$ = + 4.00*10$^{-3}$
$y_{cg}$ = - 2.00*10$^{-3}$

There are three shock mounts for the device. The shock mounts are located at the following coordinates:
For Mount 1:

x(1) = (-32.7*10 $^{-3}$) - $x_{cg}$ ;
y(1) = (23.1*10 $^{-3}$) - $y_{cg}$ ;

For Mount 2:

x(2) = (31.5*10 $^{-3}$) - $x_{cg}$ ;
y(2) = (-1.5*10 $^{-3}$) - $y_{cg}$ ;

For Mount 3:

x(3) = (-32.7*10 $^{-3}$) - $x_{cg}$ ;
y(3) = (-23.1*10 $^{-3}$) - $y_{cg}$ ;

The specific design procedure is as follows:
1. Choose the HDA Peak Resonant Frequency as:

$f_p$ = 350 Hz

The total effective stiffness in the x direction is $k_{xEFF}$ N/m, while that in the y direction is $k_{yEFF}$ N/m,

$k_{xEFF} = k_{YEFF} = 2*f_p*\Pi)^2*m = (2*350 * \Pi)^2 * 0.0470$ N/m

2. Determine the effective damping constant $c_{xEFF}$ in the x direction
and $c_{yEFF}$ in the y direction.
For a frequency response of 350 Hz/5dB around the resonance peak in the transfer function

$$\frac{a_{y_{HDA}}(s)}{a_{y_{UF}}(s)}$$

Choose

$c_{xEFF} = c_{yEFF}$ = 43.74 N/m/s

where $a_{yHDA}$ = y axis linear acceleration output of HDA and $a_{yUF}$ = y axis linear excitation acceleration of the user frame.
The HDA equations of motion are:

4

$$M\ddot{u}(t) + C\dot{u}(t) + Ku(t) = C\dot{u}_{UF}(t) + Ku_{UF}(t) + f(t), \tag{1}$$

where

$$M = \begin{bmatrix} m & 0 & 0 \\ 0 & m & 0 \\ 0 & 0 & I_{zz} \end{bmatrix}$$

is the mass matrix, with $m$ being the mass of the HDA and $I_{zz}$ being its moment of inertia calculated at the center of gravity about z-axis.

The stiffness matrix is:

$$K = \begin{bmatrix} k_{11} & k_{12} & k_{13} \\ k_{12} & k_{22} & k_{23} \\ k_{13} & k_{23} & k_{33} \end{bmatrix}$$

The components in the stiffness matrix are given by:

$$
\begin{aligned}
k_{11} &= \sum_{j=1}^{n} k_{xj} \\
k_{12} &= 0 \\
k_{22} &= \sum_{j=1}^{n} k_{yj} \\
k_{13} &= -\sum_{j=1}^{n} k_{xj} y_j \\
k_{23} &= \sum_{j=1}^{n} k_{yj} x_j \\
k_{33} &= \sum_{j=1}^{n} \left( k_{xj} y_j^2 + k_{yj} x_j^2 \right)
\end{aligned}
\tag{2}
$$

The damping matrix C is similar to equation 2 with all the "k" values replaced by "c".

For the device with the specifications as set forth above, with three shock mounts which are isotropic in the x and y directions, from equation 2 above:

$$k_{11} = K_{xEFF} = k_{x1} + k_{x2} + k_{x3}$$

where $k_{x1}$, $k_{x2}$, and $k_{x3}$ are the stiffness's of mounts 1, 2 and 3 in the x direction, respectively.

Similarly,

$$k_{22} = K_{yEFF} = = k_{y1} + k_{y2} + k_{y3}$$

where the $k_y$'s are the individual mount stiffness values in the y direction.

From equation 2 above, for the given device,

$$k_{13} = -\sum_{j=1}^{n} k_{xj} y_j = k_{x1} y(1) + k_{x2} y(2) + k_{y3} y(3)$$

where the y's are the y co-ordinates of the three mounts.
and

$$k_{23} = \sum_{j=1}^{n} k_{yj} x_j = k_{y1} x(1) + k_{y2} x(2) + k_{y3} x(3)$$

where the x's are the x co-ordinates of the three mounts.
Similarly, for the damping matrix

$$c_{11} = \sum_{j=1}^{n} c_{xj}$$

or

$$c_{11} = c_{xEFF} = c_{x1} + c_{x2} + c_{x3}$$

where the cx's are the damping constants for each of the three mounts in the x direction
Again

$$c_{22} = \sum_{j=1}^{n} c_{yj}$$

or

$$c_{22} = c_{yEFF} = c_{y1} + c_{y2} + c_{y3}$$

where the cy's are the y direction damping constants.
Also

$$c_{13} = -\sum_{j=1}^{n} c_{xj} y_j = c_{x1} y(1) + c_{x2} y(2) + c_{x3} y(3)$$

where the y's are y co-ordinates of the mounts
Now

$$c_{23} = \sum_{j=1}^{n} c_{yj} x_j = c_{y1} x(1) + c_{y2} x(2) + c_{y3} x(3)$$

6

The right hand side terms of equation (1) are the forcing terms. The focus of this invention is to minimize the effect of external vibration on TMR. Thus, the spindle imbalance term f(t) is set to zero. (A solution to spindle imbalance effect on TMR is presented in copending application serial no. 07/ filed on April 30, 1992 attorney docket no. YO992-024, assigned to the same assignee as that of the present invention. For most test specifications, the input acceleration is applied to the user frame along each axis, one axis at a time, i.e., when $a_y$ is active other acceleration inputs $a_x$ and $a_z$ are set to zero.

Under these conditions

$$u_{UF} = \begin{bmatrix} u_x = 0 \\ u_y \\ u_\theta = 0 \end{bmatrix}_{UF}$$

and

$$\dot{u}_{UF} = \begin{bmatrix} \dot{u}_x = 0 \\ \dot{u}_y \\ \dot{u}_\theta = 0 \end{bmatrix}_{UF}$$

where $\dot{u}_y$ and $u_y$ are the first and second integral of the user frame acceleration $a_y$. Under this forcing condition, the equation of motion as set forth by equation 1 will have the following forcing vector:

$$F_{UF} = \begin{bmatrix} 0 \\ (c_{22}\,\dot{u}_y + k_{22}u_y) \\ 0 \end{bmatrix}_{UF}$$

Thus, $u_\theta$ mode is not directly excited. However, if the left-hand side terms of the equation of motion are observed, the $u_y$ mode generated by the acceleration input $a_y$ will generate a non-zero coupling through the $c_{23}$ and $k_{23}$ elements (third-row/second column) thus causing the $u_\theta$ mode to become active. Once the $u_\theta$ mode is excited, the $u_x$ mode will become coupled through the $c_{13}$ and $k_{13}$ elements, ultimately affecting the $u_\theta$ mode itself. Therefore, the criteria to decouple the linear acceleration input and angular dynamics of the HDA is to simultaneously cause the four elements to be zero by choosing optimum location of the mounts or by choosing the mount parameters for a given location. Hence the criteria for decoupling the mechanics is as follows:

$$k_{13} = -\sum_{j=1}^{n} k_{xj} y_j = 0 = k_{x1} y(1) + k_{x2} y(2) + k_{x3} y(3)$$

$$k_{23} = \sum_{j=1}^{n} k_{yj} x_j = 0 = k_{y1} x(1) + k_{y2} x(2) + k_{y3} x(3)$$

$$k_{11} = \sum_{j=1}^{n} k_{xj} = k_{x1} + k_{x2} + k_{x3}$$

and

For the rotary drive of the example, from the above equations, and assuming kxi's are equal to kyi's for isotropic mounts, the stiffness criterion is:

$$\begin{bmatrix} 1 & 1 & 1 \\ x(1) & x(2) & x(3) \\ y(1) & y(2) & y(3) \end{bmatrix} \begin{bmatrix} k_{x1} \\ k_{x2} \\ k_{x3} \end{bmatrix} = \begin{bmatrix} k_{x_{EFF}} \\ 0 \\ 0 \end{bmatrix}$$

or

$$\begin{bmatrix} k_{x1} \\ k_{x2} \\ k_{x3} \end{bmatrix} = \begin{bmatrix} 1 & 1 & 1 \\ x(1) & x(2) & x(3) \\ y(1) & y(2) & y(3) \end{bmatrix}^{-1} \begin{bmatrix} k_{x_{EFF}} \\ 0 \\ 0 \end{bmatrix}$$

Thus the individual mount stiffnesses $k_{x1}$, $k_{x2}$, and $k_{x3}$ can be determined for optimal decoupling.

For the rotary drive of the example, the calculated stiffness values in N/m are

$k_{xEFF}$ = 1.0*10⁵
$k_{x1}$ = 0.6575*10⁵
$k_{x2}$ = 2.0790*10⁵
$k_{x3}$ = 0.9003*10⁵

The next criterion is for the damping:

$$c_{11} = \sum_{j=1}^{n} c_{xj} = c_{x1} + c_{x2} + c_{x3}$$

$$c_{13} = \sum_{j=1}^{n} c_{xy}y_j = 0 = c_{x1}y(2) + c_{x2}y(2) + c_{y3}y(3)$$

$$c_{23} = \sum_{j=1}^{n} c_{y}x_j = 0 = c_{y1}x(2) + c_{y2}x(2) + c_{y3}x(3)$$

From the above damping criterion is:

$$
\begin{bmatrix} 1 & 1 & 1 \\ x(1) & x(2) & x(2) \\ y(2) & y(3) & y(3) \end{bmatrix}
\begin{bmatrix} c_{x1} \\ c_{x2} \\ c_{x3} \end{bmatrix} =
\begin{bmatrix} c_{x_{EFF}} \\ 0 \\ 0 \end{bmatrix}
$$

$$
\begin{bmatrix} c_{x1} \\ c_{x2} \\ c_{x3} \end{bmatrix} =
\begin{bmatrix} 1 & 1 & 1 \\ x(1) & x(2) & x(3) \\ y(2) & y(2) & (y3) \end{bmatrix}^{-1}
\begin{bmatrix} c_{x_{EFF}} \\ 0 \\ 0 \end{bmatrix}
$$

The calculated values for the damping constants for each mount are in Newtons/meter/second are:

$c_{x1} = 23.7228$, $c_{x2} = 75.0121$, $c_{x3} = 32.4851$

The essence of criteria in equations of claim 11 (4) is to achieve the following design objectives: the center of "stiffness" and "damping" should simultaneously coincide with the center of "mass" in the case when the damping and stiffness parameters "c" and "k" are isotropic in the X-Y plane.

(Isotropic means $k_{xj} = k_{yj}$. This is true when cylindrical mounts are used with their axes perpendicular to the X-Y plane of the HDA.)

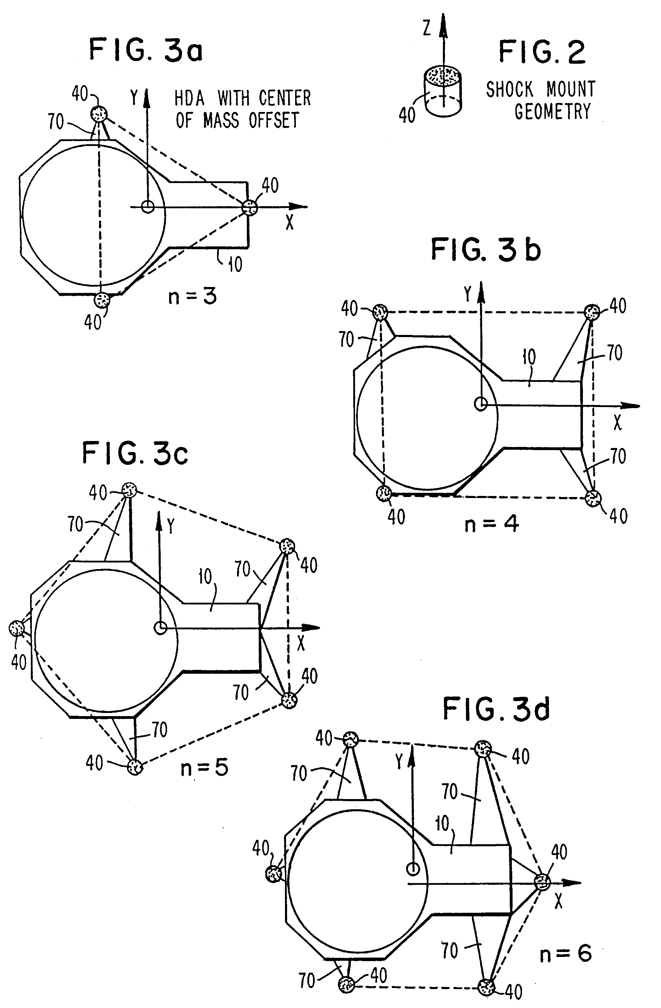

Fig. 2 illustrates a typical geometry for a shock mount or isolator 40 which is isotropic for the x-y plane. A cylindrical geometry is used with the longitudinal axis of the cylinder being disposed in a direction which is perpendicular to the x-y plane.

Fig. 3a to Fig. 3d show shock mount configurations which satisfy the above mentioned criteria of equation 4 for cases where n = 3, 4, 5 and 6, respectively. The drives have extending therefrom, extensions 70, to reach isolators 40 where necessary. For optimum TMR rejection, the designer should choose an arrangement which maximizes the $k_{33}$ component. If it is difficult to change the shock mount parameters or their location to achieve the criteria in equation 4 set forth above, the center of mass of the HDA can be moved to match the closest possible stiffness/damping center. This may be done by adding a mass to the HDA.

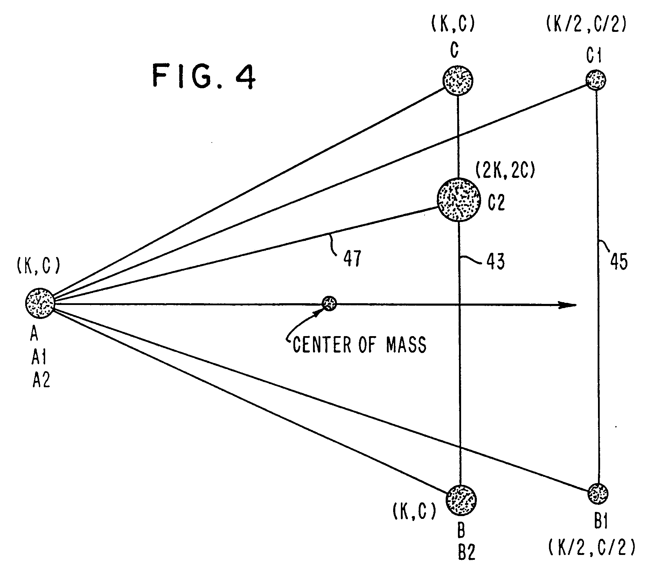

Referring to Fig. 4, for the more general case, a set of mounts having individually different stiffness and damping parameters in the x-y plane, a nonsymmetrical configuration can be designed. Fig. 4 illustrates three cases with n = 3. Configuration 43 has equal mount parameters and the center of gravity is matched with the centeroid of the triangle ABC. Configuration 45 has two mounts at positions B1 and C1 with reduced parameters. Configuration 47 has one mount at position C2 with increased parameter. In all these cases the decoupling of rotational mode is achieved.

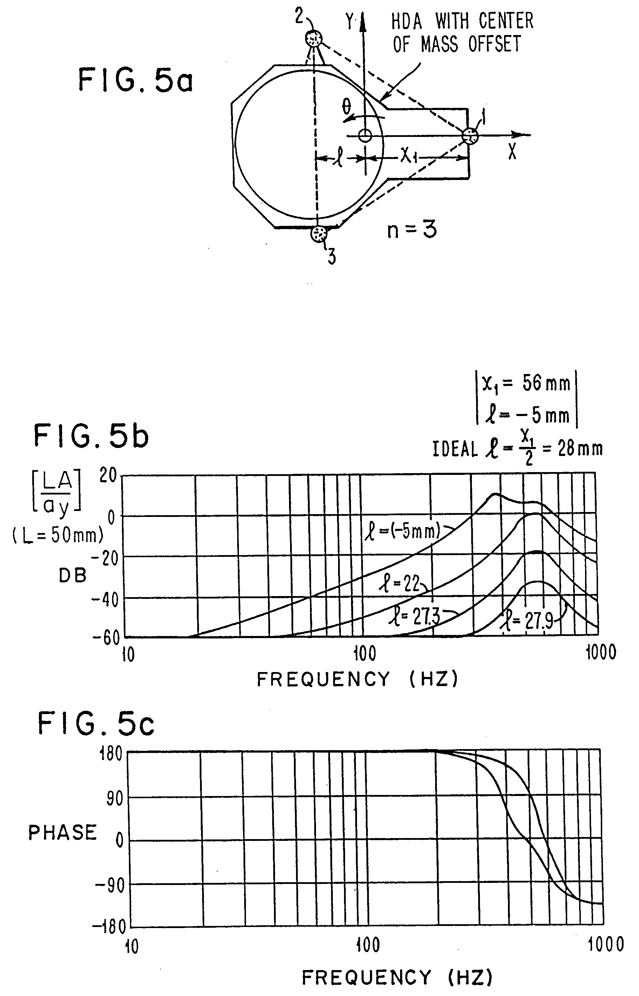

Fig. 5a illustrates the case where the "center of stiffness/damping" of the mounting system is offset from the center of mass of the drive. Fig. 5b and Fig. 5c illustrate the effect on the rotational mode transfer function for three different offsets. It is observed that the extent of the coupling from the linear to rotational modes is gradually reduced as the design approaches the theoretical condition of the center of mass being at the center of stiffness and damping.

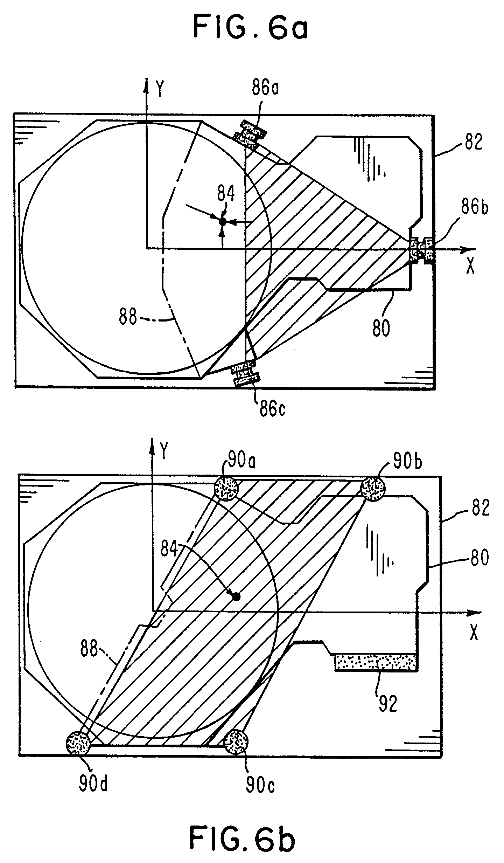

Fig. 6a illustrates an existing structure for typical drive 80 in a user frame or enclosure 82. The center of mass is located at 84 and three isolators 86a, 86b and 86c are used. The isolators are shown in cross section, and are circular, with their longitudinal axes being in or parallel to the x-y plane. The housing for drive 80 has a so called clam shell cover having a boundary located along line 88.

Referring to Fig. 6b, an alternate mounting configuration is illustrated wherein rotational mode coupling is eliminated. The design assumes that the user frame 82 is rigid. Four isolators or vibration isolation mounts 90a, 90b, 90c and 90d of the type illustrated in Fig. 2 are used. Further, the geometries of the mount locations are altered so that the cylindrical axes of the mounts are perpendicular to the x-y plane so that the requirement for isotropy in that plane is satisfied. Finally, if necessary a mass 92 may be added to the drive 80 to move the center of mass of drive 80 to its optimum position as set forth above.

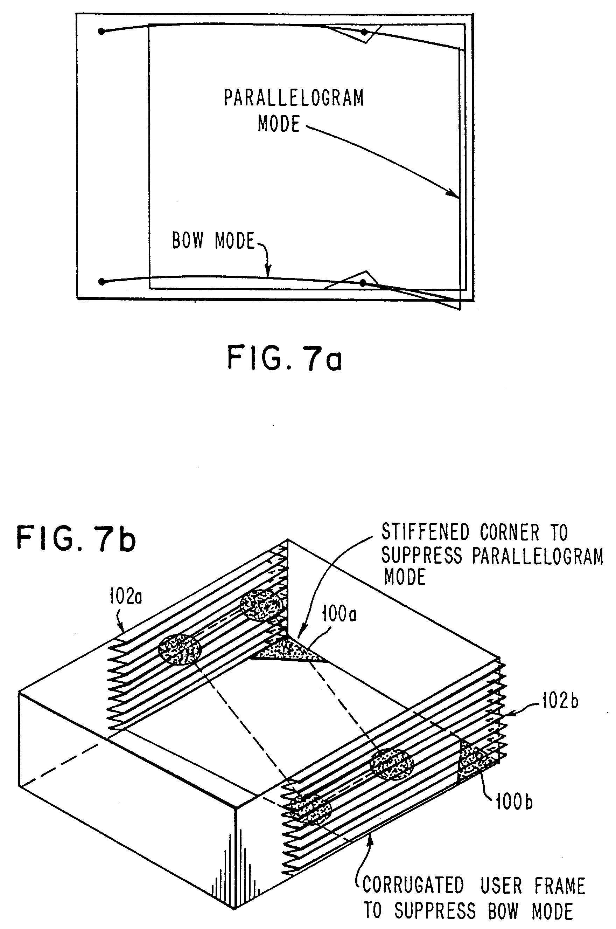

Referring to Fig. 7a, if the user frame or enclosure is not rigid, there are two potentially harmful modes of vibration. For the enclosure illustrated in Fig. 6a and Fig. 6b, the "parallelogram mode" is assumed to be dominant. However, the "bow mode" can also be detrimental if the mounting locations are not properly chosen. Each case may give rise to substantial rotation of the HDA due to user frame flexibility. A modular design solution requires that the user frame be made as stiff as possible. Two approaches suggested in Fig. 7b are stiffer corners 100a and 100b which may be provided, for example, by increasing the thickness of the frame at those locations. Also suggested are areas of corrugation 102a and 102b which stiffen the frame to suppress the bow mode.

While the invention has been described in connection with specific embodiments it will be understood that those skilled in the art may be able to develop variations of the disclosed embodiments without departing from the spirit of the invention or the scope of the following claims.

**Claims**

1. An apparatus for decoupling external linear vibration from a device mounted in an enclosure, so as to reduce resulting rotational motion of the device, comprising:
   n vibration isolation mounts located between the device and the enclosure, said mounts having characteristics and being positioned so a that the center of stiffness and the center of damping are located at the same position as the center of mass of the device.

2. The apparatus of claim 1 wherein the device is
   a rotary disk drive and the enclosure is a user frame for the rotary disk drive of a computer.

3. The apparatus of claim 2 comprising,
   in combination, the n vibration mounts, the rotary disk drive mounted in the user frame of the computer, and the computer.

4. The apparatus of claim 1 wherein the
   stiffness and damping constants are equal for each mount and the mounts are located so as to be symmetric with respect to each other in a plane.

5. The apparatus of claim 4 wherein
   the mounts are located at mirror image points of each other in the plane.

6. The apparatus of claim 4 wherein the
   center of stiffness and the center of mass are at the same point along an axis perpendicular to said plane.

7. The apparatus of claim 1 wherein
   the mounts are located at the vertices of a polygon.

8. The apparatus of claim 7 wherein said
   polygon is a regular polygon.

9. The apparatus of claim 7 wherein
said polygon is one of a triangle, a rectangle, a pentagon and a hexagon.

10. The apparatus of claim 1 further
comprising a balancing mass mounted to the device, said balancing mass being for moving the center of mass of the said device so that it is located at the center of stiffness and the center of damping.

11. The apparatus of claim 1 wherein the
n vibration isolation mounts satisfy the relationships:

$$k_{13} = \sum_{j=1}^{n} k_{xj}y_j = 0$$

$$k_{23} = \sum_{j=1}^{n} k_{yj}x_j = 0$$

$$c_{13} = -\sum_{j=1}^{n} c_{xj}y_j = 0$$

$$c_{23} = \sum_{j=1}^{n} c_{xj}x_j = 0$$

12. A method for decoupling external linear
vibration from a device mounted in an enclosure, so as to reduce resulting rotational motion of the device, comprising;
providing n vibration isolation mounts located between the device and the enclosure, said mounts having characteristics and being positioned so that the center of stiffness and the center of damping are located at the same position as the center of mass of the device.

13. The method of claim 12 wherein the device
is a rotary disk drive and the enclosure is a user frame for the rotary disk drive of a computer.

14. The method of claim 13 further comprising
installing the rotary disk drive in the user frame of the computer.

15. The method of claim 12 further comprising
selecting the mounts so that the stiffness and damping constants are equal for each mount and locating the mounts so as to be symmetric with respect to each other in a plane.

16. The method of claim 15 wherein the
mounts are located at mirror image points of each other in a plane.

17. The method of claim 15 further comprising
locating the center of stiffness and the center of mass at the same point along an axis perpendicular to said plane.

18. The method of claim 12 wherein the
mounts are located at the vertices of a polygon.

19. The method of claim 18 wherein said
polygon is a regular polygon.

20. The method of claim 18 wherein said
polygon is one of a triangle, a rectangle, a pentagon and a hexagon.

**21.** The method of claim 12 further comprising
affixing a balancing mass to the device, said balancing mass being at a position which locates the center of mass of the device with said balancing mass affixed thereto so that the center of mass is located at the center of stiffness and the center of damping.

**22.** The method of claim 12 wherein the
n vibration isolation mounts satisfy the relationships:

$$k_{13} = \sum_{j=1}^{n} k_{xj} y_j = 0$$

$$k_{23} = \sum_{j=1}^{n} k_{yj} x_j = 0$$

$$c_{13} = -\sum_{j=1}^{n} c_{xj} y_j = 0$$

$$c_{23} = \sum_{j=1}^{n} c_{xj} x_j = 0$$

# FIG. 1

FIG. 3a

HDA WITH CENTER OF MASS OFFSET

$n = 3$

FIG. 2

SHOCK MOUNT GEOMETRY

FIG. 3 b

$n = 4$

FIG. 3c

$n = 5$

FIG. 3d

$n = 6$

14

FIG. 4

$(K,C)$
C

$(K/2,C/2)$
C1

$(2K,2C)$
C2

$(K,C)$
A
A1
A2

47

43

45

CENTER OF MASS

$(K,C)$
B
B2

B1
$(K/2,C/2)$

FIG. 5a

HDA WITH CENTER OF MASS OFFSET

$n = 3$

FIG. 5b

$\left| \begin{array}{l} X_1 = 56\,\text{mm} \\ \ell = -5\,\text{mm} \end{array} \right|$

IDEAL $\ell = \dfrac{X_1}{2} = 28\,\text{mm}$

$\left[\dfrac{LA}{a\,y}\right]$

$(L = 50\,\text{mm})$

DB

$\ell = (-5\,\text{mm})$

$\ell = 22$

$\ell = 27.3$

$\ell = 27.9$

FREQUENCY (HZ)

FIG. 5c

PHASE

FREQUENCY (HZ)

# FIG . 6a

# FIG.6b

PARALLELOGRAM
MODE

BOW MODE

FIG. 7a

FIG. 7b

STIFFENED CORNER TO
SUPPRESS PARALLELOGRAM
MODE

102a

100a

102b

100b

CORRUGATED USER FRAME
TO SUPPRESS BOW MODE